(19) Europäisches Patentamt
European Patent Office
Office européen des brevets

(11) **EP 2 930 207 A1**

(12) **EUROPEAN PATENT APPLICATION**
published in accordance with Art. 153(4) EPC

(43) Date of publication:
**14.10.2015 Bulletin 2015/42**

(51) Int Cl.:
***C08L 23/00*** (2006.01)   ***B32B 27/32*** (2006.01)
***C08F 210/00*** (2006.01)   ***C08L 101/14*** (2006.01)

(21) Application number: **13861213.0**

(22) Date of filing: **02.12.2013**

(86) International application number:
**PCT/JP2013/082896**

(87) International publication number:
**WO 2014/088109 (12.06.2014 Gazette 2014/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **04.12.2012 JP 2012265006**

(71) Applicant: **Sumitomo Chemical Company Limited Tokyo 104-8260 (JP)**

(72) Inventors:
• **OOSAKI, Nobuhiro**
**Ichihara-shi**
**Chiba 299-0195 (JP)**
• **NAGANO, Masashi**
**Samutprakarn (TH)**

(74) Representative: **Vossius & Partner Patentanwälte Rechtsanwälte mbB Siebertstrasse 3 81675 München (DE)**

(54) **MIXED SOLUTION, METHOD FOR PRODUCING MIXED SOLUTION, AND MULTI-LAYER STRUCTURE**

(57)    A mixture liquid including a water-soluble resin, an aqueous medium, and an olefin polymer including monomer units based on an $\alpha$-olefin having 2 to 20 carbon atoms, monomer units based on an $\alpha,\beta$-unsaturated carboxylic acid ester, and monomer units based on a compound selected from the group consisting of $\alpha,\beta$-unsaturated carboxylic acids and $\alpha,\beta$-unsaturated carboxylic acid anhydrides, wherein the content of the monomer units based on the $\alpha$-olefin is 50% by mass or more.

**Description**

TECHNICAL FIELD

The present invention relates to a mixture liquid, a method for producing a mixture liquid, and a multilayer structure.

BACKGROUND ART

Technologies of coating a substrate or adhering a coating film to a substrate are known well. A technology of providing an adhesive layer on a surface of a substrate before coating the substrate or adhering a coating film to the substrate is also known well. For example, JP-A-11-263802 discloses a method in which an adhesive layer made of an aqueous resin composition comprising a chlorinated polyolefin is laminated onto a substrate made of an olefin resin and then a coating film is laminated on the adhesive layer.

DISCLOSURE OF THE INVENTION

However, if a coating film comprising an inorganic layered compound is formed on a surface of the adhesive layer made of the aqueous resin composition, the coating film is not adhered well to the adhesive layer and especially under a highly humid condition, it is impossible to firmly adhere the coating film comprising the inorganic layered compound to the substrate via the adhesive layer made of the aqueous resin composition.

The present invention provides a mixture liquid that can form a layer capable of firmly adhering a substrate with a coating film comprising an inorganic layered compound even under a highly humid condition, and a method for producing the mixture liquid. In addition, the present invention provides a multilayer structure in which a substrate and a coating film comprising an inorganic layered compound are firmly bonded together via an adhesive layer even under a highly humid condition.

Means for solving the problems

That is, the present invention relates to a mixture liquid comprising a water-soluble resin, an aqueous medium, and an olefin polymer comprising monomer units based on an $\alpha$-olefin having 2 to 20 carbon atoms, monomer units based on an $\alpha,\beta$-unsaturated carboxylic acid ester, and monomer units based on a compound selected from the group consisting of $\alpha,\beta$-unsaturated carboxylic acids and $\alpha,\beta$-unsaturated carboxylic acid anhydrides, wherein the content of the monomer units based on the $\alpha$-olefin is 50% by mass or more where the total content of the monomer units based on the $\alpha$-olefin having 2 to 20 carbon atoms, the monomer units based on the $\alpha,\beta$-unsaturated carboxylic acid ester, and the monomer units based on the compound selected from the group consisting of $\alpha,\beta$-unsaturated carboxylic acids and $\alpha,\beta$-unsaturated carboxylic acid anhydrides is taken as 100% by mass.

In another aspect, the present invention relates to a method for producing the above-mentioned mixture liquid comprising the following steps (1) and (2) in order,

(1) a step of dispersing the above-mentioned olefin polymer in the aqueous medium to obtain an olefin polymer dispersion liquid,
(2) a step of mixing the above-mentioned olefin polymer dispersion liquid with an aqueous solution of a water-soluble resin.

In still another aspect, the present invention relates to a multilayer structure comprising a substrate and a first layer adjoining the substrate, wherein the first layer is a layer comprising a water-soluble resin and an olefin polymer comprising monomer units based on an $\alpha$-olefin having 2 to 20 carbon atoms, monomer units based on an $\alpha,\beta$-unsaturated carboxylic acid ester, and monomer units based on a compound selected from the group consisting of $\alpha,\beta$-unsaturated carboxylic acids and $\alpha,\beta$-unsaturated carboxylic acid anhydrides, wherein the content of the monomer units based on the $\alpha$-olefin is 50% by mass or more where the total content of the monomer units based on the $\alpha$-olefin having 2 to 20 carbon atoms, the monomer units based on the $\alpha,\beta$-unsaturated carboxylic acid ester, and the monomer units based on the compound selected from the group consisting of $\alpha,\beta$-unsaturated carboxylic acids and $\alpha,\beta$-unsaturated carboxylic acid anhydrides is taken as 100% by mass.

Mode for Carrying Out the Invention

[Olefin Polymer]

The olefin polymer contained in the mixture liquid of the present invention is an olefin polymer comprising monomer units based on an $\alpha$-olefin having 2 to 20 carbon atoms, monomer units based on an $\alpha,\beta$-unsaturated carboxylic acid ester, and monomer units based on a compound selected from the group consisting of $\alpha,\beta$-unsaturated carboxylic acids and $\alpha,\beta$-unsaturated carboxylic acid anhydrides, wherein the content of the monomer units based on the $\alpha$-olefin is 50% by mass or more where the total amount of the monomer units based on the $\alpha$-olefin having 2 to 20 carbon atoms, the monomer units based on the $\alpha,\beta$-unsaturated carboxylic acid ester, and the monomer units based on the compound selected from the group consisting of $\alpha,\beta$-unsaturated carboxylic acids and $\alpha,\beta$-unsaturated carboxylic acid anhydrides is taken as 100% by mass. The mixture liquid of the present invention may contain two or more kinds of olefin polymers.

Examples of the $\alpha$-olefin having 2 to 20 carbon atoms include ethylene, propylene, 1-butene, 1-pentene, 1-hexene, 1-heptene, 1-octene, 1-nonene, 1-decene, 1-dodecene, 1-dodecadecene, and 4-methyl-1-pentene. The olefin polymer may comprise monomer units based on two or more kinds of $\alpha$-olefins.

The olefin polymer preferably has monomer units based on one or more kinds of $\alpha$-olefins selected from the group consisting of ethylene, propylene, and 1-butene, and more preferably has monomer units based on propylene and monomer units based on 1-butene. When the olefin polymer is a polymer comprising monomer units based on propylene and monomer units based on 1-butene, the content of the monomer units based on propylene is 70 to 99 mol% where the total amount of the monomer units based on propylene and the monomer units based on 1-butene in the polymer is taken as 100 mol%.

The content of the monomer units based on the $\alpha$-olefin having 2 to 20 carbon atoms in the olefin polymer is 50% by mass or more where the total amount of the monomer units based on the $\alpha$-olefin having 2 to 20 carbon atoms, the monomer units based on the $\alpha,\beta$-unsaturated carboxylic acid ester, and the monomer units based on the compound selected from the group consisting of $\alpha,\beta$-unsaturated carboxylic acids and $\alpha,\beta$-unsaturated carboxylic acid anhydrides is taken as 100% by mass, and from the viewpoint of forming a layer capable of firmly bonding together a substrate and a coating film containing an inorganic layered compound even under a highly humid condition, it is preferably 50 to 90% by mass.

Examples of the $\alpha,\beta$-unsaturated carboxylic acid esters include acrylates and methacrylates and preferably are esters of (meth)acrylic acid with an alcohol having a linear or branched alkyl group or an alcohol having a glycidyl group. Specific examples include methyl (meth)acrylate, ethyl (meth)acryate, n-propyl (meth)acrylate, isopropyl (meth)acrylate, n-butyl (meth)acrylate, isobutyl (meth)acrylate, 2-butyl (meth)acrylate, tert-butyl (meth)acrylate, cyclohexyl (meth)acrylate, 2-ethylhexyl (meth)acrylate, n-octyl (meth)acrylate, n-dodecyl (meth)acrylate, n-octadecyl (meth)acrylate, and glycidyl (meth)acrylate. Especially, an ester of an alcohol having a boiling point of 150°C or higher with (meth) acrylic acid is more preferable. The olefin polymer may comprise monomer units based on two or more kinds of $\alpha,\beta$-unsaturated carboxylic acid esters.

From the viewpoint of forming a layer capable of firmly bonding a substrate to a coating film containing an inorganic layered compound even under a highly humid condition, the content of the monomer units based on the $\alpha,\beta$-unsaturated carboxylic acid ester in the olefin polymer is preferably 0.1 to 40% by mass where the total amount of the monomer units based on the $\alpha$-olefin having 2 to 20 carbon atoms, the monomer units based on the $\alpha,\beta$-unsaturated carboxylic acid ester, and the monomer units based on the compound selected from the group consisting of $\alpha,\beta$-unsaturated carboxylic acids and $\alpha,\beta$-unsaturated carboxylic acid anhydrides is taken as 100% by mass.

Examples of the compound selected from the group consisting of $\alpha,\beta$-unsaturated carboxylic acids and $\alpha,\beta$-unsaturated carboxylic acid anhydrides include acrylic acid, methacrylic acid, maleic acid, maleic anhydride, itaconic acid, itaconic anhydride, fumaric acid, crotonic acid, half esters of unsaturated dicarboxylic acids, and half amides of unsaturated dicarboxylic acids. Especially, acrylic acid, methacrylic acrid, maleic acid, and maleic anhydride are preferred, and acrylic acid and maleic anhydride are more preferred. The olefin polymer may also comprise monomer units based on two or more kinds of compounds selected from the group consisting of $\alpha,\beta$-unsaturated carboxylic acids and $\alpha,\beta$-unsaturated carboxylic acid anhydrides.

The content of the monomer units based on the compound (s) selected from the group consisting of $\alpha,\beta$-unsaturated carboxylic acids and $\alpha,\beta$-unsaturated carboxylic acid anhydrides is preferably 0.1 to 10% by mass from the viewpoint of forming a layer capable of firmly bonding together a substrate and a coating film containing an inorganic layered compound even under a highly humid condition, provided that the total amount of the monomer units based on the $\alpha$-olefin having 2 to 20 carbon atoms, the monomer units based on the $\alpha,\beta$-unsaturated carboxylic acid ester, and the monomer units based on the compound selected from the group consisting of $\alpha,\beta$-unsaturated carboxylic acids and $\alpha,\beta$-unsaturated carboxylic acid anhydrides is taken as 100% by mass.

As to a molar ratio of the monomer units based on the $\alpha,\beta$-unsaturated carboxylic acid ester and the monomer units based on the compound selected from the group consisting of α,β-unsaturated carboxylic acids and α,β-unsaturated carboxylic acid anhydrides, it is preferable, from the viewpoint of forming a layer capable of firmly bonding together a substrate and a coating film containing an inorganic layered compound even under a highly humid condition, that the amount of the monomer units based on the compound selected from the group consisting of α,β-unsaturated carboxylic acids and α,β-unsaturated carboxylic acid anhydrides is 0.7 to 200 mol where the amount of the monomer units based on the α,β-unsaturated carboxylic acid ester is taken as 100 mol.

The olefin polymer may comprise monomer units other than the monomer units based on the α-olefin having 2 to 20 carbon atoms, the monomer units based on the α,β-unsaturated carboxylic acid ester, and the monomer units based on the compound selected from the group consisting of α,β-unsaturated carboxylic acids and α,β-unsaturated carboxylic acid anhydrides; for example, the olefin polymer may have monomer units based on vinyl acetate.

Examples of a method for preparing an olefin polymer for use in the present invention include: a method of adding an α,β-unsaturated carboxylic acid ester and a compound selected from the group consisting of α,β-unsaturated carboxylic acids and α,β-unsaturated carboxylic acid anhydrides to a prepolymer comprising monomer units based on an α-olefin having 2 to 20 carbon atoms, a method of adding a compound selected from the group consisting of α,β-unsaturated carboxylic acids and α,β-unsaturated carboxylic acid anhydrides to a prepolymer comprising monomer units based on an α-olefin having 2 to 20 carbon atoms and monomer units based on an α,β-unsaturated carboxylic acid ester, a method of adding an α,β-unsaturated carboxylic acid ester to a prepolymer comprising monomer units based on an α-olefin having 2 to 20 carbon atoms and monomer units based on a compound selected from the group consisting of α,β-unsaturated carboxylic acids and α,β-unsaturated carboxylic acid anhydrides, and a method of copolymerizing an α-olefin having 2 to 20 carbon atoms, an α,β-unsaturated carboxylic acid ester, and a compound selected from the group consisting of α,β-unsaturated carboxylic acids and α,β-unsaturated carboxylic acid anhydrides.

From the viewpoint of forming a layer capable of firmly bonding together a substrate and a coating film containing an inorganic layered compound even under a highly humid condition, the olefin polymer is preferably a polymer whose weight average molecular weight is within a range of 30,000 to 250,000.

[Water-Soluble Resin]

The mixture liquid of the present invention comprises a water-soluble resin. The term "water-soluble" as referred to herein means that nothing is visually found to remain undissolved when 1 g of a resin is added to 1000 g of an aqueous medium, described infra, followed by stirring with a dispersion machine (DESPERMH-L, manufactured by Asada Iron Works Co., Ltd., vane diameter = 52 mm, rotating speed = 3,100 rpm, container capacity = 3 L, distance between the bottom face and the vane = 28 mm) at 95°C and a peripheral speed of 8.5 m/sec for 90 minutes. The mixture liquid of the present invention may contain two or more kinds of water-soluble resins.

The water-soluble resin preferably contains a functional group such as a hydroxyl group, a carboxyl group, an amino group, a sulfonic acid group, a carboxylate group, and an ammonium group and more preferably contains a hydroxyl group.

Examples of the resin containing hydroxyl groups include polyvinyl alcohol, partially saponified polyvinyl alcohol, and polysaccharides.

Examples of the polymer containing carboxyl groups include polyacrylic acid, polymethacrylic acid, partially neutralized polyacrylic acid, and partially neutralized polymethacrylic acid. Examples of the resin having amino groups include polyvinylamine.

Preferably, the water-soluble resin is a resin containing two or more kinds of functional groups in one molecule or a mixture of a resin containing first functional groups and a resin containing second functional groups different from the first functional groups. It is preferred that the functional groups contained in a water-soluble resin can form a covalent bond or an ionic bond.

Examples of the resin containing two or more kinds of functional groups in one molecule include a copolymer comprising monomer units based on vinyl alcohol and monomer units based on one or more kinds of monomers selected from among acrylic acid, methacrylic acid, and vinylamine. As the mixture of the resin containing first functional groups and the resin containing second functional groups different from the first functional groups, there can be mentioned a mixture of the above-mentioned resin containing hydroxyl groups and the above-mentioned resin containing carboxyl groups, a mixture of the above-mentioned resin containing hydroxyl groups and the above-mentioned resin containing amino groups, and a mixture of the above-mentioned resin containing carboxyl groups and the above-mentioned resin containing amino groups.

More preferably, the water-soluble resin is a resin containing hydroxyl groups and carboxyl groups because it can be dissolved easily in an aqueous medium and therefore it is easy to handle and from the viewpoint of forming a layer capable of firmly bonding together a substrate and a coating film containing an inorganic layered compound even under a highly humid condition.

The content of the water-soluble resin in the mixture liquid of the present invention is preferably 2 to 40% by mass, more preferably 5 to 30% by mass, and even more preferably 5 to 20% by mass, where the total amount of the olefin polymer and the water-soluble resin is taken as 100% by mass. The content of the olefin polymer in the mixture liquid of the present invention is preferably 98 to 60% by mass, more preferably 95 to 70% by mass, and even more preferably 95 to 80% by mass, where the total amount of the olefin polymer and the water-soluble resin is taken as 100% by mass.

[Aqueous Medium]

The aqueous medium contained in the mixture liquid of the present invention is a liquid medium that contains water as a main component. The aqueous medium may be either only water or a mixture of water with the liquid medium described below, Examples of the liquid medium other than water to be used as the aqueous medium include alcohols (methanol, ethanol, propanol, isopropanol, ethylene glycol, diethylene glycol, etc.), dimethylformamide, dimethyl sulfoxide, and acetone; alcohols are preferred.

The total amount of the olefin polymer and the water-soluble resin is preferably 1 to 50% by mass, more preferably 3 to 40% by mass, and even more preferably 5 to 30% by mass, where the amount of the mixture liquid of the present invention is taken as 100% by mass.

The mixture liquid of the present invention may contain publicly known additives, such as various stabilizers including antioxidants, UV absorbers, and light stabilizers, a colorant, a defoaming agent, a viscosity modifier, and a wetting agent, according to the purpose or the application. Two or more kinds of additives may be contained.

[Method for Producing Mixture Liquid]

While examples of a method for producing the mixture liquid of the present invention include a method in which the olefin polymer and the water-soluble resin are dissolved or dispersed in the same aqueous medium, a method in which the olefin polymer is dispersed in an aqueous medium and then the water-soluble resin is mixed with the aqueous medium, a method in which the water-soluble resin is dissolved in the aqueous medium and then an olefin resin is dispersed in the aqueous medium, a method in which the olefin polymer and the water-soluble resin are individually dissolved or dispersed in separate portions of aqueous medium and then these are mixed together, the method for producing the mixture liquid of the present invention preferably comprises in order (1) a step of dispersing the olefin polymer in the aqueous medium to obtain an olefin polymer dispersion liquid and (2) a step of mixing an aqueous solution of the water-soluble resin with the olefin polymer dispersion liquid.

Examples of a method for dispersing an olefin polymer in an aqueous medium in the step of obtaining the olefin polymer dispersion liquid include a method in which monomers and an aqueous medium are mixed and then the monomers are polymerized (emulsion polymerization method) and a method in which a polymer is dispersed in an aqueous medium (post-emulsification method).

Preferably, the obtained olefin polymer dispersion liquid is left at rest at normal temperature. This makes it possible to obtain an olefin polymer dispersion liquid in which a fine olefin polymer is uniformly dispersed without occurrence of agglomeration of the olefin polymer, which is a dispersoid in the dispersion liquid.

Specific examples of the method for dispersing an olefin polymer in an aqueous medium (post emulsification method) include:

(a) a method in which an olefin polymer and an organic solvent are charged into a reactor, and these are heated and stirred to dissolve the olefin polymer in the solvent, and then a liquid medium selected from the group consisting of water and organic solvents and an emulsifier are charged into the resulting solution and these are heated and stirred, and before or after this, a liquid medium selected from the group consisting of water and organic solvents is further optionally added, followed by stirring (solvent emulsification method), and

(b) a method in which an olefin polymer and optionally an organic solvent are charged into a kneading machine, and these are heated and stirred to melt the olefin polymer, and then a liquid medium selected from the group consisting of water and organic solvents and an emulsifier are charged into the molten olefin polymer and these are heated and stirred, and before or after this, a liquid medium selected from the group consisting of water and organic solvents is further optionally added, followed by stirring (mechanical emulsification method). In any of the methods (a) and (b), water is poured at least once.

As the organic solvent, an organic solvent capable of dissolving the olefin polymer is used, and specific examples thereof include toluene, xylene, and methylcyclohexane.

In the production method (a) described above, a container equipped with a heating device capable of heating and a stirrer capable of adding shearing force or the like to contents is used as the reactor, and the container is preferably a hermetically sealed container, a pressure-resistant container, or a sealing pressure-resistant hermetically sealed container.

Examples of such a reactor include an autoclave with a stirrer.

The stirring may be performed under either normal pressure or reduced pressure. The stirring may be performed, for example, at a rotation speed of about 50 to about 1000 rpm. Preferably, the rotation speed is increased with advance of the dispersion or stirring of the olefin polymer. The temperature is usually 50 to 200°C, preferably 60 to 150°C, more preferably 70 to 100°C.

Preferably, the solvent is removed from the resulting olefin polymer dispersion liquid. The removal of the solvent is preferably performed under reduced pressure or under addition of pressure. The pressure to be used in the case of removing the solvent under reduced pressure is usually -1 MPa to 0.1 MPa. The pressure to be used in the case of removing the solvent under addition of pressure is usually 0.1 MPa to 1 MPa.

In the above-mentioned production method (b), examples of the kneading machine include a roll mill, a kneader, an extruder, a Labo Plastomill, and a Banbury mixer. Examples of the extruder include a single screw extruder having only one screw in its barrel and a multi-screw extruder having two or more screws in its barrel.

The method for dispersing an olefin polymer in an aqueous medium by using an extruder may be the following method. The olefin polymer is supplied continuously from a hopper of the extruder and it is heated and melt-kneaded. An emulsifier is supplied to the extruder from a supply port different than the hopper, and the molten olefin polymer and the emulsifier are kneaded with a screw. Then, water is further supplied from at least one supply port provided in a compression zone, a metering zone, a decoration zone, etc. of the extruder, and these are kneaded with a screw and then the kneaded material is continuously extruded through a die.

In a process of producing an olefin polymer dispersion liquid, it is preferred to add a component other than those described above, such as a defoaming agent and a viscosity modifier, at an arbitrary time.

Moreover, in a process of producing an olefin polymer dispersion liquid, the emulsifier is preferably used in an amount within a desired range. When the emulsifier is used excessively, the excess emulsifier may be removed from the resulting olefin polymer dispersion liquid. One exemplary method for removing the emulsifier is a method of using a centrifugal separator, a filter having pores whose average pore diameter is smaller than the average particle diameter of the olefin polymer dispersion liquid, an ultrafiltration membrane, or the like.

Examples of the emulsifier to be used for the olefin polymer dispersion liquid include a surfactant. Examples of the surfactant include a nonionic surfactant, an anionic surfactant, a cationic surfactant, and an amphoteric surfactant.

The content of the emulsifier in the olefin polymer dispersion liquid is usually 1 to 30 parts by mass, preferably 1 to 25 parts by mass, where the amount of the olefin polymer is taken as 100 parts by mass. By containing the emulsifier in an amount within this range, the dispersion state of the olefin polymer in the aqueous medium becomes good and it is possible to improve the adhesiveness between the substrate and the first layer in a multilayer structure obtained by a method described infra.

(2) The water-soluble resin aqueous solution to be used in the step of mixing an aqueous solution of a water-soluble resin with an olefin polymer dispersion liquid is obtained by mixing and stirring the water-soluble resin with an aqueous medium. The concentration of the water-soluble resin in the aqueous solution of the water-soluble resin is preferably 0.1 to 30% by mass, provided that the sum total of the water-soluble resin and the aqueous medium is taken as 100% by mass.

[Multilayer structure]

The multilayer structure according to the present invention is a multilayer structure comprising a substrate and a first layer adjoining the substrate, wherein the first layer is a layer comprising a water-soluble resin and an olefin polymer comprising monomer units based on an $\alpha$-olefin having 2 to 20 carbon atoms, monomer units based on an $\alpha,\beta$-unsaturated carboxylic acid ester, and monomer units based on a compound selected from the group consisting of $\alpha,\beta$-unsaturated carboxylic acids and $\alpha,\beta$-unsaturated carboxylic acid anhydrides, wherein the content of the monomer units based on the $\alpha$-olefin is 50% by mass or more.

[Substrate]

Examples of the material that constitutes the substrate include metal, resin, wood, ceramics, and glass.

The form of the substrate may be paper, cloth, nonwoven fabric, film, etc.

Examples of the metal include copper, iron, silver, and aluminum and also include alloys thereof.

Examples of the ceramics include alumina, silica, zirconia, and titanium oxide.

As the resin, thermoplastic resin, thermosetting resin, photocurable resin, and so on may be used.

Examples of the thermoplastic resin include olefin-based resin, ethylene-based copolymers, ester-based resin, amide-based resin, polyarylate, acrylic resin, polystyrene, styrene-based resin, hydrophobized cellulose-based resin, chlorine-containing resin, fluorine-containing resin, hydrogen bonding resin, carbonate resin, sulfone resin, ethersulfone resin, ether-ether-ketone resin, phenylene oxide resin, methylene oxide resin, and imide resin.

Examples of the olefin-based resin include polyethylene, ethylene-α-olefin copolymers, polypropylene, polybutene-1, poly-4-methylpentene-1, and cyclic olefin resin.

The cyclic olefin resin is one which is a homopolymer of a cyclic olefin or a copolymer of a cyclic olefin with another comonomer and which has an alicyclic structure in a main chain and/or a side chain, specific examples of the cyclic olefin include monocyclic olefins, such as cyclobutene, cyclopentene, cyclohexene, and cyclooctane; substituted monocyclic olefins, such as 3-methylcyclopentene, 4-methylcyclopentene, and 3-methylcyclohexene; polycyclic olefins, such as norbornene, 1,2-dihydrodicyclopentadiene, and tetracyclododecene (dimethanooctahydronaphthalene); and substituted polycyclic olefins, such as 5-methylnorbornene.

Examples of the ethylene-based copolymers include an ethylene-vinyl acetate copolymer or its saponified product, ethylene-α,β-unsaturated carboxylic acid ester copolymers, and ethylene-α,β-unsaturated carboxylic acid copolymers.

Examples of the ester-based resin include polyethylene terephthalate, polybutylene terephthalate, and polyethylene naphthalate.

Examples of the amide-based resin include nylon-6 (Ny-6), nylon-6,6, metaxylenediamine-adipic acid polycondensate, polymethylmethacrylamide, and polymetaxylylene adipamide (MXD6-Ny).

Examples of the acrylic resin include polymethyl methacrylate.

Examples of the styrene-based resin include AS resin and ABS resin.

Examples of the hydrophobized cellulose-based resin include cellulose triacetate and cellulose diacetate.

Examples of the chlorine-containing resin include polyvinyl chloride and polyvinylidene chloride.

Examples of the fluorine-containing resin include polyvinyl fluoride, polyvinylidene fluoride, polytetrafluoroethylene, ethylene-tetrafluoroethylene copolymers, and tetrafluoroethylene-perfluoroalkyl vinyl ether copolymers.

Examples of the hydrogen bonding resin include polyvinyl alcohol, ethylene-vinyl alcohol copolymers (EVCH), and cellulose derivatives; of these, a polymer in which the mass fraction of hydroxyl groups per unit mass of the resin satisfies a proportion of 20 to 60% is preferred.

Examples of the thermosetting resin include phenolic resin, melamine resin, urea resin, ethyleneimine resin, and resin obtained by reacting one or more thermally-reactive compounds, such as epoxy compounds, (meth)acryloyl compounds, allyl compounds, and vinyl compounds, in the presence of a thermal polymerization initiator.

Examples of the photocurable resin include epoxy resin obtained by polymerizing an epoxy compound having two or more epoxy groups in one molecule or an acrylic compound having two or more acryloyl groups and methacryloyl groups in one molecule using a photopolymerization initiator, and acrylic resin.

The substrate may be composed of either a single layer or multiple layers.

When the multilayer structure according to the present invention is a film, the substrate may be any of a non-oriented film, a uniaxially oriented film, and a biaxially oriented film.

Moreover, the substrate may be a multilayer film comprising Ny-6 layer/MXD6-Ny layer/Ny-6 layer, polypropylene layer/ethylene-vinyl alcohol copolymer layer/polypropylene layer, or the like and also may be a film with aluminum, alumina, or silica deposited thereon.

When the form of the substrate of the present invention is film, one example of a preferable substrate is a substrate having a heat seal layer made of resin as one surface layer. Examples of the resin to constitute the heat seal layer include olefin-based resin, ethylene-based copolymers, ester-based resin, and acrylonitrile-based resin.

Examples of the substrate having a heat seal layer include a method of co-extruding a resin for the heat seal layer and a resin different from the resin for heat seal layer formation, a method in which a solution of a resin for heat seal layer formation dissolved in a liquid medium is applied to a substrate precursor and then the liquid medium is removed to form the heat seal layer, a method of extrusion laminating a resin for heat seal layer formation to a surface of a substrate precursor, and a method of dry laminating a heat sealable resin film and a substrate precursor together. A substrate precursor as used herein is a film formed of a layer different from the heat seal layer of a substrate having a heat seal layer. Preferably, a surface of the substrate precursor on a side where a heat seal layer is to be formed and a surface of a heat sealable resin film on a side where this film is to be laminated with the substrate precursor are subjected to surface treatment, described infra.

[First Layer]

The olefin-based polymer contained in the first layer is an olefin polymer comprising monomer units based on an α-olefin having 2 to 20 carbon atoms, monomer units based on an α,β-unsaturated carboxylic acid ester, and monomer units based on a compound selected from the group consisting of α,β-unsaturated carboxylic acids and α,β-unsaturated carboxylic acid anhydrides, wherein the content of the monomer units based on the α-olefin is 50% by mass or more, where the total amount of the monomer units based on the α-olefin having 2 to 20 carbon atoms, the monomer units based on the α,β-unsaturated carboxylic acid ester, and the monomer units based on the compound selected from the group consisting of α,β-unsaturated carboxylic acids and α,β-unsaturated carboxylic acid anhydrides is taken as 100% by mass; the olefin polymers that have been provided as examples of the olefin polymer contained in the above-described mixture liquid can be used.

As the water-soluble resin contained in the first layer, the water-soluble resin contained in the above-described mixture liquid may be used.

When the substrate is a film, examples of the multilayer structure comprising a substrate and a first layer adjoining the substrate include a multilayer structure comprising one substrate and one first layer, wherein the first layer is laminated adjoiningly on one surface of the substrate, and a multilayer structure comprising one substrate and two first layers, wherein one first layer, the substrate, and the other first layer are laminated adjoiningly in order.

[Second Layer]

The multilayer structure according to the present invention may be a multilayer structure further including, next to the first layer, a second layer comprising an inorganic layered compound and a resin. The multilayer structure having the second layer is excellent in gas barrier property and scratch resistance.

When the substrate is a film, examples of the multilayer structure comprising a substrate, a first layer adjoining the substrate, and a second layer adjoining the first layer include a multilayer structure comprising one substrate, one first layer, and one second layer, wherein the substrate, the first layer, and the second layer are laminated adjoiningly in order, a multilayer structure comprising one substrate, two first layers, and one second layer, wherein one first layer, the substrate, the other first layer, and the second layer are laminated adjoiningly in order, and a multilayer structure comprising one substrate, two first layers, and two second layers, wherein one second layer, one first layer, the substrate, the other first layer, and the other second layer are laminated adjoiningly in order.

The inorganic laminar compound contained in the second layer refers to a substance in which unit crystal layers are mutually stacked to form a layered structure. The layered structure referred to herein means a structure in which planes where atoms bonding strongly to each other through covalent bonds or the like are arranged densely are stacked approximately parallel to each other by weak bonding force such as Van der Waals force. Among inorganic laminar compounds, clay minerals having swellability and cleavability in a liquid medium are preferably used.

The clay minerals are classified into two types, i.e., (i) a type having a two-layer structure, which comprises a silica tetrahedral layer, and an octahedral layer disposed thereon and comprising a central metal such as aluminum and magnesium; and (ii) a type having a three-layer structure, which comprises an octahedral layer comprising a central metal such as aluminum and magnesium, and a silica tetrahedral layer disposed on the both sides of the octahedral layer so as to sandwich the octahedral layer. Examples of (i) two-layer structure type of clay minerals include clay minerals of kaolinite group-serpentine group. Examples of (ii) three-layer structure type of clay minerals include clay minerals of talc-pyrophyllite group, smectite group, vermiculite group, mica group, brittle mica group, and chlorite group, which are classified depending on the number of interlayer cation(s).

Specific examples of the kaolinite-serpentine group include kaolinite, dickite, nacrite, halloysite, antigorite, chrysotile, lizardite, amesite, berthierine, cronstedite, nepouite, kellyite, fraiponite, and brindleyite.

Specific example of the talc-pyrophyllite group include, talc, willemseite, kerolite, pimelite, pyrophyllite, and ferry pyrophyllite.

Specific examples of the smectite group include montmorillonite, beidellite, nontronite, saponite, sauconite, stevensite, hectorite, volkonskoite, and swinefordite.

Specific examples of the vermiculite group include trioctahedral vermiculite and diocathedral vermiculite.

Specific examples of the mica group include tetrasilylic mica, sodium taeniolite, muscovite, phlogopite, biotite, annite, eastonite, siderophyllite tetra-ferri-annite, lepidolite, polylithionite, celadonite, ferroceladonite, ferro-aluminoceladonite, aluminoceladonite, tobelite, palagonite, and lepidolite.

Specific examples of the brittle mica group include xanthophylite, clintonite, bityite, anandite, pearl mica, and margarite.

Specific examples of the chlorite group include clinochlore, chamosite, pennantite, nimite, baileychlore, donbassite, cookeite, and sudoite.

Clay minerals whose dispersability or the like have been improved through treatment, e.g. ion exchange, with an organic substance (see "Dictionary of Clay" published by Asakura Shoten; hereinafter preferred to as "organically modified clay mineral") also can be used as the inorganic layered compound. As the organic substance for treating clay minerals, publicly known quaternary ammonium salts such as dimethyldistearyl ammonium salt and trimethylstearyl ammonium salt, phosphonium salts, imidazolium salts, etc. may be used.

Among the above-mentioned clay minerals, clay minerals of the smectite group, vermiculite group and mica group, which are (ii) three-layer structure type of clay minerals, are preferred and those of the smectite groups are particularly preferred. As the smectite group, montmorillonite, beidellite, nontronite, saponite, a sauconite, stevensite, and hectorite are preferred, and montmorillonite is preferably used especially from the standpoints of swellability and cleavability in a liquid medium.

Two or more kinds of inorganic layered compounds may be used.

As to the aspect ratio of the inorganic layered compound, one having an aspect ratio of 20 or more is preferably used, one having an aspect ratio of 100 or more is more preferably used, and one having an aspect ratio of 200 or more is even more preferably used. From the standpoints of easy swellability, easy cleavability, film formability, the aspect ratio of the inorganic layered compound is preferably 10000 or less, more preferably 5000 or lass, and even more preferably 3000 or less.

Preferably, the average particle diameter of the inorganic layered compound is 5 $\mu$m or less. If the average particle diameter is too large, the product tends to be poor in transparency and film formability. Therefore, especially in a product to be used for applications requiring transparency, the average particle diameter of the inorganic layered compound is preferably 1 $\mu$m or less. The aspect ratio and the average particle diameter of an inorganic layered compound are values exhibited in an inorganic layered compound dispersion liquid comprising the inorganic layered compound and a liquid medium capable of swelling and cleaving the inorganic layered compound.

In the present invention, the aspect ratio (Z) of an inorganic layered compound is defined by a formula $Z = L/a$ where "L" is the average particle diameter of the inorganic layered compound and "a" is the unit thickness of the inorganic layered compound, namely, the thickness of unit crystal layers of the inorganic layered compound, which is determined by the powder X-ray diffraction method (see "Guide to Instrumental Analysis (a) " p. 69, Edited by Jiro Shiokawa, published by Kagaku-Doj in Publishing Company, Inc. (1985).

The average particle diameter of an inorganic laminar compound is the particle diameter determined the diffraction/scattering method carried out in liquid medium, namely, a median diameter based on the volume. Specifically, the average particle diameter is determined, by the Mie scattering theory, through calculation of a particle size distribution reasonable for a diffraction/scattering pattern obtained by passing a beam of light through a dispersion liquid of an inorganic layered compound. Specifically, for example, there can be mentioned a method in which the average particle diameter is determined by dividing the measuring range of the particle size distribution into proper sections and determining a representative particle diameter for each of the sections, thereby converting the particle size distribution, which is continuous by nature, into discrete quantities.

Specifically, the inorganic layered compound to be used in the present invention is preferably one having a swelling value, measured in a swellability test described infra, of 5 or more, and more preferably one having a swelling value of 20 or more. In addition, those which show a cleavage value of 5 or more in the cleavability test described below are preferred, and those which show a cleavage value of 20 or more are more preferred.

[Swellability Test]

In a 100-ml graduated cylinder is placed 100 ml of liquid medium, and 2 g of an inorganic layer compound is added thereto. After standing at 23°C for 24 hours, the volume in milliliter of the inorganic layer compound dispersion layer in the graduated cylinder is read from the graduation at the interface between the inorganic layer compound dispersion layer and the supernatant liquid. The larger the value (swell value), the higher the swellability.

[Cleavability Test]

Thirty grams of an inorganic layered compound is added slowly to 1, 500 mL of a liquid medium and is dispersed by means of a disperser (DESPA MH-L manufactured by Asada Iron Works Co., Ltd., vane diameter = 52 mm, rotating speed = 3,100 rpm, container capacity = 3 L, distance between the bottom face and the vane = 28 mm) at a peripheral speed of 8.5 m/min, at 23°C for 90 minutes. Then, 100 mL of a resulting dispersion liquid is taken into a graduated cylinder. After being left at rest for 60 minutes, the volume (ml) of an inorganic layered compound dispersion layer is read from a graduation line at the interface between the inorganic layered compound dispersion layer and the supernatant. The larger the value (cleavage value), the higher the cleavability.

In the present invention, examples of the solvent in which an inorganic layered compound is swollen or cleaved include, when the inorganic layered compound is a hydrophilic inorganic layered compound, water, alcohols (methanol, ethanol, propanol, isopropanol, ethylene glycol and diethylene glycol), dimethylformamide, dimethylsulfoxide and acetone. In particular, water, alcohols and water-alcohol mixtures are preferred.

When the inorganic layered compound is an organically modified inorganic layered compound, aromatic hydrocarbons such as benzene, toluene and xylene; ethers such as ethyl ether and tetrahydrofuran; ketones such as acetone, methyl ethyl ketone and methyl isobutyl ketone; aliphatic hydrocarbons such as n-pentane, n-hexane and n-octane; halogenated hydrocarbons such as chlorobenzene, tetrachloromethane, chloroform, dichloromethane, 1,2-dichloroethane and perchloroethylene; ethyl acetate, methyl methacrylate, dioctyl phthalate, dimethylformamide, dimethylsulfoxide, methyl cellosolve, silicone oil, etc. may be used as the solvent.

Examples of the resin contained in the second layer include polyvinyl alcohol, an ethylene-vinyl alcohol copolymer, polyvinylidene chloride, polyacrylonitrile, polysaccharides, polyacrylic acid and esters thereof, and urethane resin. Preferably, the resin is a resin being water-soluble and containing two or more kinds of functional groups in one molecule or a mixture of a resin being water-soluble and containing first functional groups and a resin being water-soluble and containing second functional groups different from the first functional groups. The term "water-soluble" as referred to herein means that nothing is visually found to remain undissolved when 1 g of a resin is added to 1000 g of an aqueous medium, described supra, followed by stirring with a dispersion machine (DESPER MH-L, manufactured by Asada Iron Works Co., Ltd., vane diameter = 52 mm, rotating speed = 3,100 rpm, container capacity = 3 L, distance between the bottom face and the vane = 28 mm) at 95°C and a peripheral speed of 8.5 m/sec for 90 minutes.

The functional group contained in the resin is preferably polar groups such as a hydroxyl group, a carboxyl group, an amino group, a sulfonic acid group, a carboxylate group, and an ammonium group, and it is preferred that these functional groups can form a covalent or ionic bond.

Examples of the resin contains two or more kinds of functional groups in one molecule include a vinyl alcohol-acrylic acid copolymer, a vinyl alcohol-methacrylate copolymer, a vinyl alcohol-vinylamine copolymer, an acrylic acid-vinylamine copolymer, and a methacrylic acid-vinylamine copolymer.

When the resin is a mixture of a resin being water-soluble and containing first functional groups and a resin being water-soluble and containing second functional groups different from the first functional groups, examples thereof include a combination of two or more resins selected from among polyvinyl alcohol, polyacrylic acid, polymethacrylic acid, polyvinylamine, etc.

The resin is preferably a resin containing hydroxyl groups and a carboxyl groups in one molecule or a mixture of a resin containing hydroxyl groups and a resin containing carboxyl groups because it can be dissolved easily in an aqueous liquid medium and is easy to handle and from the viewpoints of the water resistance, the gas barrier property, and the scratch resistance of a multilayer structure comprising a substrate, a first layer and a second layer. It is noted that the term "hydroxy group" does not encompass "-OH" in a carboxyl group. Examples of the resin having hydroxyl groups and carboxyl groups in one molecule include a vinyl alcohol-acrylic acid copolymer and a vinyl alcohol-methacrylic acid copolymer. Examples of the resin containing hydroxy groups include polyvinyl alcohol and polysaccharides. Examples of the polymer containing carboxyl groups include polyacrylic acid, polymethacrylic acid, partially neutralized polyacrylic acid, partially neutralized polymethacrylic acid, and an acrylic acid-methacrylic acid copolymer.

The resin containing hydroxyl groups is preferably polyvinyl alcohol because it can be dissolved easily in an aqueous medium and is easy to handle and from the viewpoints of the gas barrier property and the scratch resistance of a multilayer structure.

The "polyvinyl alcohol" is a polymer predominantly comprising monomer units based on vinyl alcohol. Specific examples of such "polyvinyl alcohol" include a polymer obtained by hydrolyzing acetic acid portions of a vinyl acetate polymer (a partial hydrolysate of a vinyl acetate polymer or a complete hydrolysate of a vinyl acetate polymer), and polymers obtained by hydrolyzing a polymer such as vinyl trifluoroacetate polymer, vinyl formate polymer, vinyl pivalate polymer, tert-butyl vinyl ether polymer, and trimethylsilyl vinyl ether polymer. Regarding the details of the "polyvinyl alcohol", a book entitled "The World of PVA" edited by POVAL Society (1992), published by Polymer Publishing Association; and a book entitled "POVAL" written by Nagano et al. (1981), published by Polymer Publishing Association may be referred to. The degree of "saponification" of polyvinyl alcohol is preferably 70 ml% or more, more preferably 85 ml% or more. A product with a degree of saponification of 98 mol% or more, namely, so-called completely saponified polyvinyl alcohol is even more preferable. The degree of polymerization is preferably from 100 to 5000, more preferably from 200 to 3000.

A polyvinyl alcohol derivative additionally having functional groups other than hydroxyl groups can also be used as polyvinyl alcohol. Examples of such functional groups other than hydroxyl groups include amino group, thiol group, sulfone group, phosphoric acid group, carboxylate group, sulfonic acid ion group, phosphate anion group, ammonium group, phosphonium group, silyl group, siloxane group, alkyl group, allyl group, fluoroalkyl group, alkoxy group, carbonyl group, and halogen group. Some hydroxyl groups in polyvinyl alcohol may have been replaced by one or more kinds of such functional groups.

Polysaccharides are biopolymers which are synthesized by polycondensation of various monosaccharides in organisms and herein also include chemically modified products of such polymers. Examples thereof include cellulose, cellulose derivatives such as hydroxymethylcellulose and hydroxyethylcellulose: and amylose, amylopectin, pullulan, curdlan, xanthan, chitin and chitosan.

Preferably, the resin having carboxyl groups is one or more resins selected from among polyacrylic acid, polymethacrylic acid, partially neutralized polyacrylic acid, and partially neutralized polymethacrylic acid. The weight average molecular weight of the resin containing carboxyl groups is preferably within the range of from 2000 to 10000000, more preferably from 100000 to 10000000.

The partially neutralized polyacrylic acid or the partially neutralized polymethacrylic acid can be obtained by adding an alkali metal ion donatable compound, mentioned infra, to an aqueous solution of polyacrylic acid or polymethacrylic acid to neutralize, and thereby converting some of the carboxyl groups into their alkali metal salt. A desired degree of neutralization can be achieved by controlling the amount ratio of polyacrylic acid or polymethacrylic acid to the alkali metal ion donatable compound. The degree of neutralization is calculated by the following formula.

$$\text{Degree of neutralization} = (A/B) \times 100$$

A: The number of moles of the carboxyl groups having been neutralized into metal salt in 1 g of a partially neutralized polyacrylic acid or a partially neutralized polymethacrylic acid.

B: The total number of moles of the carboxyl groups and the carboxyl groups having been neutralized into metal salt in 1 g of a partially neutralized polyacrylic acid or a partially neutralized polymethacrylic acid.

The partially neutralized polyacrylic acid or the partially neutralized polymethacrylic acid can be obtained also by bringing an aqueous solution of a completely neutralized polyacrylic acid or a completely neutralized polymethacrylic acid into contact with a hydrogen ion type ion exchange resin. There can be mentioned a method in which an aqueous solution of a completely neutralized polyacrylic acid or a completely neutralized polymethacrylic acid and a hydrogen ion type ion exchange resin are mixed together and stirred, and then a residue of the hydrogen ion type ion exchange resin is removed; in this method, a partially neutralized polyacrylic acid or a partially neutralized polymethacrylic acid having a desired degree of neutralization can be obtained by adjusting the amount ratio of the completely neutralized polyacrylic acid or the completely neutralized polymethacrylic acid to the hydrogen ion type ion exchange resin, the aqueous solution temperature, and the stirring time. There also can be mentioned a method of passing an aqueous solution of the completely neutralized polyacrylic acid or the completely neutralized polymethacrylic acid through a column in which a hydrogen ion type ion exchange resin is packed; in this method, a partially neutralized polyacrylic acid or a partially neutralized polymethacrylic acid having a desired degree of neutralization can be obtained by adjusting the column length, the flow-through rate, and the aqueous solution temperature.

The degree of neutralization is calculated by the following formula.

$$\text{Degree of neutralization} = (C/D) \times 100$$

C: The number of moles of the carboxyl groups present in the form of metal salt in 1 g of a partially neutralized polyacrylic acid or a partially neutralized polymethacrylic acid

D: The total number of moles of the carboxyl groups formed via ion exchange and the carboxyl groups present in the form of metal salt in 1 g of a partially neutralized polyacrylic acid or a partially neutralized polymethacrylic acid

From the viewpoints of the water resistance and the transparency of a multilayer structure comprising a substrate, a first layer and a second layer, the above-mentioned degree of neutralization of the partially neutralized polyacrylic acid and the partially neutralized polymethacrylic acid is preferably 0.1% to 20%.

Hereinafter, a mixture of a resin containing hydroxyl groups and a resin containing carboxyl groups and a resin containing hydroxyl groups and carboxyl groups in one molecule are sometimes collectively called a "resin component containing hydroxy groups and carboxyl group".

When the sum total of the amounts of the hydroxyl groups and the carboxyl groups contained in a resin component containing hydroxyl groups and carboxyl groups is taken as 100 mol%, the amount of the hydroxyl groups is preferably 30 to 95 mol%, and the amount of the carboxyl groups is preferably 5 to 70 mol%. More preferably, the amount of the hydroxyl groups is 70 to 95 mol% and the amount of the carboxyl groups is 5 to 30 mol%.

From the viewpoints of the water resistance, the gas barrier property, and the scratch resistance of a multilayer structure comprising a substrate, a first layer, and a second layer, the sum total of the mass of the hydroxyl groups and the mass of the carboxyl groups is preferably 30 to 60% by mass, more preferably 35 to 55% by mass. The above-mentioned sum total of the mass of the hydroxyl groups and the mass of the carboxyl groups is a value taken when the mass of the resin component containing hydroxyl groups and carboxyl group is taken as 100% by mass. The carboxyl groups as referred to herein include the above-mentioned neutralized carboxyl groups.

The amounts of the hydroxyl groups and the hydroxyl groups contained in the resin component containing hydroxyl groups and carboxyl groups can be determined by a publicly known NMR method, IR method, or the like. In, for example, the IR method, the ratio can be calculated from a working curve produced by using samples whose molar ratio of the hydroxyl groups to the carboxyl groups has been known. In addition, when using a mixture of a vinyl alcohol homopolymer (namely, a product obtained via complete saponification of acetate ester portions of a vinyl acetate polymer) with an acrylic acid homopolymer and/or a methacrylic acid homopolymer, the amounts of hydroxyl groups and carboxyl groups can be calculated from the masses of the respective polymers. The total mass of the hydroxyl groups and the carboxyl groups contained in a resin containing hydroxyl groups and carboxyl groups also can be calculated by the publicly known NMR method, IR method, or the like. In, for example, the IR method, working curves are produced by using polyol polymers each having a known number of polyol units and polycarboxylic acids each having a known number of polycarboxylic acid units, and then the total mass of the hydroxyl groups and the carboxyl groups can be calculated. In the case of using a mixture of a vinyl alcohol homopolymer and an acrylic acid homopolymer and/or a methacrylic acid homopolymer, the masses of hydroxyl groups and carboxyl groups are calculated from the masses of the respective polymers, and the sum total of these masses is the total mass of the hydroxyl groups and the carboxyl groups.

When the resin contained in the second layer is a resin component containing hydroxyl groups and carboxyl groups, it is preferable from the viewpoints of the water resistance, gas barrier property, and scratch resistance of the multilayer structure comprising the substrate, the first layer, and the second layer that the second layer contains an alkali metal ion. Examples of the alkali metal ion include sodium ion, lithium ion, and potassium ion. When the mass of the resin contained in the second layer is taken as 100 parts by mass, the mass of the alkali metal ion contained in the second layer is 0.2 to 5 parts by mass, preferably 0.2 to 2 parts by mass.

The alkali metal ion derives from an alkali metal ion donatable compound. That is, when the resin contained in the second layer is a resin component containing hydroxyl groups and carboxyl groups, the second layer preferably contains an alkali metal ion donatable compound. Examples of the alkali metal ion donatable compound include sodium hydroxide, sodium hypophosphite, lithium hydroxide, and potassium hydroxide. When the inorganic layered compound contained in the second layer is montmorillonite, montmorillonite acts as an alkali metal ion donatable compound because a sodium ion is contained between layers of montmorillonite. Therefore, it is particularly preferable that the inorganic layered compound contained in the second layer is montmorillonite. As the alkali metal ion donatable compound, two or more compounds may be used in combination.

The second layer may further contain a plasticizer. If the plasticizer is contained, superior drawability is attained when a multilayer structure is thermoformed. The plasticizer is a compound having a molecular weight of 200 to 4000 in which at least one hydroxyl group is attached to each of two or more consecutive carbon atoms in the molecule. From the standpoint of ease in handling when forming the second layer by coating, it is preferable that the plasticizer is soluble in water.

From the standpoint of solubility in water, polymers of polyhydric alcohols such as polysorbitol, polymannitol, polydulcitol, polyxylitol, polyerythritol, and polyglycerin are preferable as the plasticizer, and polyglycerin is most preferable. Two or more plasticizers may be used.

From the standpoint drawability at the time of thermoforming, the plasticizer is preferably polyglycerin. The molecular weight of the plasticizer is preferably 350 to 3000, more preferably 500 to 2500.

From the standpoint of drawability at the time of thermoforming, the amount of the plasticizer contained in the second layer relative to 100 parts by mass of the resin contained in the second layer is preferably 20 to 150 parts by mass, more preferably 25 to 120 parts by mass, even more preferably 40 to 120 parts by mass, and most preferably 60 to 110 parts by mass.

The second layer may contain publicly known additives, for example, such additives as antioxidants, UV absorbers, light stabilizers, anti-blocking agents, and colorants, according to the purpose or the application. Two or more kinds of additives may be contained.

[Third Layer]

In addition to the substrate, the first layer, and the second layer, the multilayer structure according to the present invention may further include, next to the second layer, a third layer containing a resin. As the resin contained in the third layer, the resin described as the resin used for the second layer may be used. The resin, used for the second layer and the resin used for the third layer may be either the same or of different types. The third layer may further contain an inorganic layered compound. When the third layer contains an inorganic layered compound, the third layer is a layer wherein the volume fraction of the inorganic layered compound contained in the third layer (the volume fraction of the third layer is taken as 100 vol.%) differs from the volume fraction of the inorganic layered compound contained in the second layer (the volume fraction of the second layer is taken as 100 vol.%).

When enhancing the scratch resistance of the multilayer structure, it is preferable than the volume fraction of the inorganic layered compound in the third layer (the volume fraction of the third layer is taken as 100 vol.%) is higher than the volume fraction of the inorganic layered compound in the second layer (the volume fraction of the second layer is taken as 100 vol.%).

When enhancing the transparency of the multilayer structure, it is preferable than the volume fraction of the inorganic layered compound in the third layer (the volume fraction of the third layer is taken as 100 vol. %) is lower than the volume fraction of the inorganic layered compound in the second layer (the volume fraction of the second layer is taken as 100 vol.%).

The third layer may contain the above-mentioned plasticizer, alkali metal ion, and so on.

When the substrate is a film, examples of a multilayer structure comprising a substrate, a first layer disposed next to the substrate, a second layer disposed next to the first layer, and a third layer disposed next to the second layer include a multilayer structure comprising one substrate, one first layer, one second layer, and one third layer, wherein the substrate, the first layer, the second layer, and the third layer are laminated in order adjacent to each other, a multilayer structure comprising one substrate, two first layers, one second layer, and one third layer, wherein one of the first layers, the substrate, the other first layer, the second layer, and the third layer are laminated in order adjacent to each other, and a multilayer structure comprising one substrate, two first layers, two second layers, and two third layers, wherein one of the third layers, one of the second layers, one of the first layers, the substrate, the other first layer, the other second layer, and the other third layer are laminated in order adjacent to each other.

[Method for Producing Multilayer Structure]

The multilayer structure of the present invention can be produced by applying the above-described mixture liquid to a surface of the substrate to form a first application film, and subsequently removing an aqueous medium from the first application film to form the first layer.

As a method for applying the mixture liquid to the surface of the substrate to form the first application film, there may be used gravure methods such as the direct gravure method and the reverse gravure method, roll coating methods such as the double roll beat coating method, the bottom-feed triple reverse coating method, the doctor knife method, the die coating method, the bar coating method, the dipping method, and the spray coating method. Since a layer can be formed easily, it is preferred to adopt a dipping method, a spray coating method, or a gravure method. The first application film may be formed either on a part of the surface of the substrate or on the entire surface of the substrate.

The temperature condition for removing the aqueous medium from the first application film is usually 20 to 150°C, preferably 30 to 140°C, more preferably 40 to 130°C, and even more preferably 50 to 120°C. The time for removing the aqueous medium is usually 1 second to 24 hours. Examples of the method for removing the aqueous medium include a method of bringing a hot roll into contact with a surface of the substrate on which the first application layer is not formed, a method of bringing a heat medium such as air into contact with the first application film, and a method of performing heating with a microwave.

The substrate surface to which the mixture liquid is to be applied is allowed to have been subjected to surface treatment such as corona treatment, ozone treatment, electron beam treatment, ion treatment, flame treatment using silane gas or the like, normal pressure or reduced pressure plasma treatment prior to the application. The surface treatment may be applied also to the first layer and the second layer.

When the multilayer structure according to the present invention is a multilayer structure further including, next to the first layer, a second layer comprising an inorganic layered compound and a resin, the second layer can be formed by applying a second coating liquid comprising the inorganic layered compound, the resin and an aqueous medium to a surface of the first layer of the multilayer structure to form a second application film, and subsequently removing the liquid medium from the second application film.

As the liquid medium of the second coating liquid, the aforementioned solvent that can swell and cleave the inorganic layered compound can be used.

Examples of the method for preparing the second coating liquid containing an inorganic layered compound, a resin, and a liquid medium include a method comprising dissolving or dispersing the inorganic layered compound and the resin individually in separate portions of the liquid medium and then mixing them to form a coating liquid and a method comprising dissolving or dispersing the inorganic layered compound and the resin in the same portion of the liquid medium to obtain a coating liquid. When the above-mentioned plasticizer is contained, there can be mentioned a method comprising dissolving or dispersing the inorganic layered compound, the resin, and the plasticizer individually in separate portions of the liquid medium and then mixing them to form a coating liquid and a method comprising dissolving or dispersing the inorganic layered compound, the resin, and the plasticizer in the same portion of the liquid medium to obtain a coating liquid.

When preparing the second coating liquid, it is preferable to disperse the inorganic laminar compound in a liquid medium by high pressure dispersion treatment in order to swell and cleave the inorganic laminar compound in the coating liquid fully in the medium. The high pressure dispersion treatment used herein is a treatment method comprising forcing a liquid mixture composed of an inorganic laminar compound and a solvent to pass through capillary tubes at high speed and then combining flows, thereby causing the flows to collide with each other or against the inner walls of the capillary tubes to add high shear and/or high pressure. In the high pressure dispersion treatment, it is desirable to cause the mixture liquid to pass through capillary tubes with a diameter of about 1 $\mu$m to about 1000 $\mu$m so that a maximum pressure of 100 kgf/cm$^2$ or more can be applied to the mixture liquid. The maximum pressure is more preferably 500 kgf/cm$^2$ or more, particularly preferably 1000 kgf/cm$^2$ or more. The maximum speed of the mixture liquid at which the dispersion liquid arrives during it passes through the capillary tubes preferably is 100 m/s or more, and the rate of heat transfer due to pressure loss preferably is 100 kcal/hour or more. The high pressure dispersion process can be conducted by use of a high pressure dispersing apparatus, such as an ultrahigh pressure homogeniser manufactured by Microfluidics Corporation (trade name: MICROFLUIDIZER), NANOMIZER manufactured by Nanomizer Inc., a Manton Gaulin type high pressure dispersing device, and Homogenizer manufactured by Izumi Food Machinery Co., Ltd. The mixture liquid which is subjected to the high pressure dispersion treatment may contain a resin.

The second application film can be formed by using a method similar to the method for forming the first application film. For a method for removing the liquid medium from the second application film, the same conditions as the temperature condition, time, and heat source for removing an aqueous medium from the first application film may be applied.

Preferably, a surfactant is added to the second coating liquid. By applying the second coating liquid containing the surfactant to a surface of a first layer to form a second layer, the adhesiveness between the second layer and the first layer can be enhanced. The content of the surfactant is usually 0.001 to 5% by mass in 100% by mass of the coating liquid.

The surfactant to be used may be a surfactant the same as that to be used as the above-mentioned emulsifier; in particular, it is desirable, from the viewpoint of improvement in adhesion, to use alkali metal salts of carboxylic acids with an alkyl chain having from 6 to 24 carbon atoms, ether type nonionic surfactants (silicone-based nonionic surfactants) such as polydimethylsiloxane-polyoxyethylene copolymers, or fluorine type nonionic surfactants (fluorine-containing nonionic surfactants) such as perfluoroalkyl ethylene oxide compounds.

When the multilayer structure according to the present invention is a multilayer structure further comprising, next to the second layer, a third layer comprising a resin, the third layer can be formed by applying a third coating liquid comprising the resin and an aqueous medium to a surface of the second layer of the multilayer structure to form a third application film, and subsequently removing the liquid medium from the third application film. As the liquid medium to be used for the preparation of the third coating liquid, the aforementioned solvent that can swell and cleave the inorganic layered compound can be used like the second coating liquid. When the third coating liquid contains an inorganic layered compound or a plasticizer, the third coating liquid can be prepared by a method similar to that for the second coating liquid. When the third coating liquid contains an inorganic layered compound, it may be a coating liquid having been subjected to high pressure dispersion treatment like the second coating liquid. A surfactant may be added to the third coating liquid. As the method for forming the third application film and the method for removing the liquid medium from the third application film, the method for forming the second application film and the method for removing the liquid medium from the second application film can be used, respectively.

The thickness of the first layer in the multilayer structure according to the present invention is usually within the range of from 0.5 to 20 $\mu$m. When the multilayer structure according to the present invention has a second layer and a third layer, both the layers are usually within the range of from 0.05 to 10 $\mu$m in thickness, and preferably, the thickness of the second layer is greater or equal to the thickness of the third layer.

**[0141]** [0094]

[Dry Heat Treated Product]

When one or both of the second layer and the third layer in the multilayer structure according to the present invention contain a resin having two or more kinds of functional groups, it is preferable to dry heat treat the multilayer structure according to the present invention in order to enhance water resistance, gas barrier property, and scratch resistance. A structural body obtained by subjecting a multilayer structure to dry heat treatment may be called a dry heat treated product. The dry heat treatment is a treatment to hold a multilayer structure under an atmosphere of from 100°C to 300°C and a water vapor concentration of less than 50 g/m$^3$. The dry heat treatment temperature is preferably from 120°C to 200°C. The time for which the dry heat treatment is performed is usually from one second to one hour. The water vapor concentration at the time of dry heat treatment is preferably from 0 to 40 g/m3. Examples of the method of dry heat treatment include a method of holding the multilayer structure in contact with a hot roll, a heat medium, or the like and a method of heating the multilayer structure with infrared rays or microwaves. When the multilayer structure according to the present invention is subjected to the thermoforming described infra, the heating treatment in the thermoforming may be the dry heat treatment.

[Wet Heat Treatment Product]

When one or both of the second layer and the third layer in the multilayer structure according to the present invention contain a resin having two or more kinds of functional groups, it is preferable to wet heat treat the dry heat treated product in order to enhance water resistance, gas barrier property, and scratch resistance. A structural body obtained by subjecting a dry heat treated product to wet heat treatment may be called a wet heat treated product. The wet heat treatment is a treatment to hold a dry heated article under an atmosphere of a temperature from 100°C or higher and a water vapor concentration more than 290 g/m$^3$ or in water at 80°C or higher. The time for which the wet heat treatment is performed is usually from one second to one hour.

When treating a dry heat treated product under an atmosphere of a temperature higher than or equal to 100°C and a water vapor concentration higher than 290 g/m$^3$, the temperature is preferably within the range of from 120 to 200°C and the water vapor concentration is preferably within the range of from 500 to 20000 g/m$^3$. When treating a dry heat treated product in water at 80°C or higher, the temperature is preferably within the range of from 100 to 140°C. Before performing the wet heat treatment, the dry heat treated product may be subjected to aging, for example, at 23°C and a humidity of 50 %RH.

In order to remove the moisture contained in a wet heat treated product, the article may be subjected to drying treatment after the wet heat treatment.

The drying treatment is a treating method of holding a wet heat treated product usually at a humidity of 50 %RH or lower, a temperature of from 20 to 100°C for one second to 24 hours.

When the multilayer structure according to the present invention is used as a molded article such as a container and a bottle or a decoration sheet, the multilayer structure preferably has a second layer or a third layer from the standpoints of water resistance, gas barrier property, and scratch resistance. Likewise, when the dry heat treated product and the wet heat treated product according to the present invention are used as a molded article such as a container and a bottle or a decoration sheet, they are preferably a dry heat treated product and a wet heat treated product of a multilayer structure having a second layer or a third layer from the standpoints of water resistance, gas barrier property, and scratch resistance.

In one permitted embodiment, the first layer is formed on at least one surface of a substrate shaped beforehand into a prescribed shape and then, if necessary, the second layer or the third layer is formed, and in another permitted embodiment, the first layer is formed on at least surface of a preliminarily shaped substrate, such as a sheet or a parison, then, if necessary, the second layer or the third layer is formed to prepare a multilayer structure, which is then shaped by thermoforming into a prescribed shape. The thermoforming is a molding method of heat treating a multilayer structure to shape it into a prescribed shape, and Examples thereof include blow molding, vacuum molding, pressure molding, and vacuum/pressure molding.

When the substrate is made of a crystalline thermoplastic resin, the thermoforming is preferably performed in such a manner that the temperature of the substrate or the multilayer structure to be thermoformed is held at 100 to 250°C for 1 to 60 seconds and then the substrate or the multilayer structure is shaped when the temperature of the substrate or the multilayer structure is within a range of from a temperature 30°C lower than the glass transition temperature of the crystalline thermoplastic resin contained in the substrate to a temperature 30°C higher than the glass transition temperature of the crystalline thermoplastic resin. The crystalline thermoplastic resin as referred to herein is a thermoplastic resin having a glass transition temperature and a melting point. The glass transition temperature can be measured using a differential scanning calorimeter (DSC) or the like. When the substrate is made of a non-crystalline thermoplastic resin, it is preferable that the temperature of the multilayer structure is held at 100 to 250°C for 1 to 60 seconds and then the substrate or the multilayer structure is shaped when the temperature of the substrate or the multilayer structure is within a range of from a temperature 30°C lower than the glass transition temperature of the non-crystalline thermoplastic resin contained in the substrate to a temperature 30°C higher than the glass transition temperature of the non-crystalline thermoplastic resin. The non-crystalline thermoplastic resin as referred to herein is a thermoplastic resin having only a glass transition temperature and having no melting point. The presence of the glass transition temperature and the melting point can be determined by the use of the aforementioned DSC, etc.

When a multilayer structure is thermoformed, the molded article obtained by thermoforming the multilayer structure is a dry heat treated product because the heating treatment done during the thermoforming corresponds to the above-mentioned dry heat treatment. The dry heat treated product obtained by thermoforming a multilayer structure may be wet heat treated to obtain a wet heat treated product.

Moreover, when a multilayer structure having the second layer or the third layer according to the present invention is used as a decoration sheet, a molded article can be obtained by thermoforming the sheet-shaped multilayer structure to produce a dry heat treated product, and then supplying a plasticized thermoplastic resin to the substrate side of the dry heat treated product, followed by shaping. One specific example is a method in which a plasticized thermoplastic resin is fed by injection molding, injection-compression molding, injection-press moulding, or the like into a mold cavity where a multilayer structure having the second layer or the third layer as a surface layer has been set with any one layer being held in firm contact with the internal cavity surface of the mold, so that a molded article in which the fed thermoplastic resin and a dry heat treated product are laminated is obtained.

When one or both of the second layer and the third layer in the multilayer structure of the present invention contain a resin having two or more kinds of functional groups, a reaction of the functional groups is accelerated by heat treating during the above-described dry heat treatment or thermoforming, so that water resistance, gas barrier property, and scratch resistance are improved. Moreover, especially when the second layer or the third layer contains a plasticizer, the multilayer structure is superior in drawability and, therefore, the second layer or the third layer can be inhibited from cracking.

Since a layer formed from the mixture liquid according to the present invention adheres firmly to a substrate of plastics, especially, a polyolefin substrate, or a substrate of non-crystalline resin such as polymethyl methacrylate, polyvinyl chloride, and polystyrene even under a highly humid condition, the mixture liquid according to the present invention can be used as an adhesive or a primer. A multilayer structure composed of a substrate and the first layer according to the present invention adheres firmly to a layer containing an inorganic layered compound like the above-described second layer. When the multilayer structure according to the present invention has the second layer or the third layer, this is suited as a packaging material or a container because it is superior in water resistance and gas barrier property, and it can be used as a molded article with it used as a decoration sheet, a substrate, or a vacuum heat insulation panel because it is further superior in scratch resistance, heat resistance, and optical properties.

When the multilayer structure is used as a packaging material or a container, the shape thereof may be film, bag, pouch, bottle, bottle cap, carton container, cup, pan, tray, tank, tube, and syringe. Examples of contents include foodstuffs and non-food products. Examples of foodstuffs include confectionaries, processed foods, and beverages. Examples of non-food products include toiletry products, fuel, medical supplies, electronic parts, and electronic instruments.

Examples of the molded article in which the multilayer structure is used as a decoration sheet include housing exterior parts, housing interior parts, furniture components, automobile exterior parts, automobile interior parts, motorcycle exterior parts, household electric appliance parts, sundry parts, and signboards. Examples of the housing exterior parts include rain gutters, entrance decorative covers, and underfloor ventilation openings. Examples of the housing interior parts include interior door units, closet folding door unit, baseboards, wall-tatami gap insertions, ceiling cornices, fixture lumbers, threshold sliders, window frames, handrails, flooring materials, wall panels, and ceiling boards. Examples of the furniture components include decorative boards, drawer, front doors of sink cabinets, bed bumpers, tables, chairs, cases, lighting fixture parts, and picture frames. Examples of the automobile exterior parts include bumpers, door mirrors, and fender bodies. Examples of the automobile interior parts include instrument panels, dashboards, door trims, and body side trims. Examples of the motorcycle exterior parts include hoods and cowlings. Examples of the household electric appliance parts include doors of refrigerators and waterproofing pans for washing machines.

Examples of substrates include substrates for displays and substrates for solar cells. Examples of the substrates for displays include substrates for liquid crystal displays and substrates for flexible displays, e.g., for organic EL displays. Examples of substrates for solar cells include substrates for silicon solar cells or substrates for dye sensitized solar cells.

EXAMPLES

The invention is described in detail below with reference to Examples. First, methods for measuring physical properties and the like are described.

[Thickness measurement]

A thickness of 0.5 $\mu$m or more was measured by means of a digital thickness meter (contact-type thickness meter, trade name: Ultra-High Precision Deci-Micro Head MH-15M, manufactured by Nihon Kogaku K.K.). A thickness less than 0.5 $\mu$m was determined through cross section observation by a transmission electron microscope (TEM).

[Measurement of Molecular Weight Distribution of Olefin Polymer (1)]
Measurement was conducted under the following conditions by gel permeation chromatography (GPC).
Instrument: HLC-8121GPC/HT manufactured by TOSOH Corporation
Column: TSKgel GMH$_{HR}$-H(S) HT, four columns, manufactured by TOSH Corporation
Temperature: 145°C
Solvent: o-dichlorobenzene
Eluent flow rate: 1.0 ml/min.
Sample concentration: 1 mg/ml
Injection amount: 300 $\mu$l
Molecular weight standard substance: standard polystyrenes
Detector: differential refraction

[Melt Flow Rate (MFR, unit: g/10 min) of Olefin Polymer (1)]

Measurement was conducted for olefin polymer (1) under conditions of a load of 2.16 kgf and a temperature of 130°C by a method according to JIS K7210.

[Amount of monomer units based on compound selected from the group consisting of α,β-unsaturated carboxylic acids and α,β-unsaturated carboxylic acid anhydrides in olefin polymer]

For olefin polymer (1), the amount of monomer units based on a compound selected from the group consisting of α,β-unsaturated carboxylic acids and α,β-unsaturated carboxylic acid anhydrides was measured by the following method. A solution prepared by dissolving 1.0 g of an olefin polymer in 20 ml of xylene was dropped into 300 ml of methanol under stirring and thereby the olefin polymer was precipitated. The precipitated olefin polymer was collected and vacuum dried (at 80°C for 8 hours). A 100-$\mu$m thick film was prepared with a hot press using a dry olefin polymer, and the IR absorption spectrum of the obtained film was measured. Based on the absorption near 1780 cm$^{-1}$, the content (mass) of the monomer units based on maleic anhydride in the olefin polymer was determined.

As the amount of monomer units based on a compound selected from the group consisting of α,β-unsaturated carboxylic acids and α,β-unsaturated carboxylic acid anhydrides in olefin polymer (2), a catalog value was adopted. The catalog value was a value determined from an IR absorption spectrum.

[Amount of monomer units based on α,β-unsaturated carboxylic acid ester in olefin polymer]

The amount of the monomer units based on an α,β-unsaturated carboxylic acid ester contained in olefin polymer (1) was measured by the following method. An olefin polymer (50 mg) was dissolved in 1.0 mL of deuterated o-dichlorobenzene and then subjected to 1H-NMR measurement. The content (mass) of the monomer units based on an α,β-unsaturated carboxylic acid ester to the content of the monomer units based on an α-olefin having 2 to 20 carbon atoms was calculated from the integral of a chemical shift region of 0.7 to 1.9 ppm and the integral of a chemical shift region of 3.9 to 4.2 ppm. As the amount of the monomer units based on an α,β-unsaturated carboxylic acid ester contained in olefin polymer (2), a catalog value was adopted.

[Particle size measurement]

The particle diameter was measured using a laser diffraction/scattering particle size distribution analyzer (LA910 manufactured by Horiba, Ltd.). The average particle diameter of the clay mineral in the coating liquid (5) described infra was measured with a paste cell at an optical path length of 50 $\mu$m. Further, the average particle diameter of the clay mineral in a liquid of the coating liquid (5) diluted to about 200 times was measured by the flow cell method at an optical path length of 4 mm. In both the measurements, the average particle diameters determined were the same. This fact confirms that the clay mineral in the coating liquid (5) was fully swollen and cleaved. This value was considered as the average particle diameter L of the clay mineral in the second layer.

The average particle diameters of the dispersed olefin polymer (1) in the coating liquid (1) and the dispersed olefin polymer (2) in the coating liquid (3) were measured by the above-mentioned flow cell method.

[Aspect ratio calculation]

The diffraction measurement of a clay mineral was conducted by the powder method using an x-ray diffraction apparatus (XD-5A, manufactured by Shimadzu Corporation.). Thus, the unit thickness "a" of the claymineral was determined. Using an average particle diameter L measured by the method described above, the aspect ratio Z of the clay mineral was calculated from an equation Z = L/a. X-ray diffraction measurement was performed for a material obtained by drying the coating liquid (5) and it was thereby confirmed that the interplanar spacing of the clay mineral had been enlarged.

[Method for calculation of the amount of hydroxyl groups and the amount of carboxyl groups in the second layer]

For multilayer structures (1) to (4), polyvinyl alcohol (completely saponified product) was used as a resin containing first functional groups and polyacrylic acid was used as a resin containing second functional groups.

The amount (mol) of the hydroxyl groups in the polyvinyl alcohol and the amount (mol) of the carboxyl groups in the polyacrylic acid were calculated by the following formulae. Each of the values was divided by the sum total of both the values, thereby calculating the respective amounts (the total amount of hydroxyl groups and carboxyl groups was taken as 100 mol%). Amount of hydroxyl groups (mol) = (mass (g) of polyvinyl alcohol)/(molecular weight per one monomer unit constituting the polyvinyl alcohol)

```
Amount of carboxyl groups (mol) = (mass (g) of polyacrylic

acid)/(molecular weight per one monomer unit constituting the

polyacrylic acid)
```

[Method for calculation of total mass of hydroxyl groups and carboxyl groups in the second layer]

For multilayer structures (15 to (4), polyvinyl alcohol (completely saponified product) was used as a resin containing first functional groups and polyacrylic acid was used as a resin containing second functional groups.
The amount of hydroxyl groups and the amount of carboxyl groups were calculated by the formulas given below and they were summed.

```
Mass (% by mass) of hydroxyl groups = (17 / (molecular weight

per monomer unit constituting the polyvinyl alcohol))×(mass (g)

of the polyvinyl alcohol / mass (g) of the resin)×100

Mass (% by mass) of carboxyl groups = (45 / (molecular weight

per monomer unit constituting the polyacrylic acid))×(mass (g)

of the polyacrylic acid / mass (g) of the resin)×100
```

In the multilayer structures (1) to (4), the mass of the resin is the sum of the mass of the polyvinyl alcohol and the mass of the polyacrylic acid in the second layer.

[Measurement of alkali metal ion concentration]

For a material obtained by drying the coating liquid (5), the sodium ion concentration was measured by using an inductively coupled plasma emission spectroscopy (Optima 3000, manufactured by Perkin Elmer Japan Co., Ltd.), and then the sodium ion concentration in the second layer was determined. The method for sample preparation is as follows. One gram of the dried material of the coating liquid was sampled and then 1 ml of 96% sulfuric acid was added thereto, followed by ashing in an electric furnace. The residue was dissolved in 5% hydrochloric acid. The solution was placed in the inductively coupled plasma emission spectroscopy and then the sodium ion concentration was measured. Furthermore, from the mass ratio of the polyvinyl alcohol, the polyacrylic acid, and the clay mineral in the second layer and the above-mentioned sodium ion concentration, there was measured the mass of alkali metal ion where the total of the mass of the polyvinyl alcohol and the mass of the polyacrylic acid was taken as 100 parts by mass.

[Dry-Heat Treatment]

Multilayer structures (1) to (4) (210 mm × 300 mm) were heat treated for 10 minutes in an oven at 130°C and a water vapor concentration of 5 g/m3, and dry heat treated products (1) to (4) were thereby obtained.

[Oxygen Permeability]

The oxygen permeabilities of the dry heat treated products (1) to (4) were measured under conditions of 23°C and 90 %RH by using an ultrahigh sensitive oxygen transmission rate tester (OX-TRAN ML, manufactured by MOCON Inc.) on the basis of JIS K7126. A smaller oxygen permeability indicates a higher gas barrier property.

[Adhesion Test]

For dry heat treated products (1) to (4), an adhesion test was performed by the following method. Under conditions of 23°C and 50 %RH, 10×10 square cuts each being 2 mm on each side were formed on a surface of the second layer. Cellophane tape was stuck on the dry heat treated product so that all the cut portions of the second layer might be covered, and the sample was aged overnight under conditions of 23°C and 0 %RH. The cellophane tape was removed and the number of squares where the second layer remained on the dry heat treated product was counted. In Table 1, the case where 100 squares remained was indicated by O, the case where 99 to 50 squares remained was indicated by Δ, and the case where 49 or less squares remained was indicated by x. The more squares remained, the more firmly the substrate and the second layer were adhered via the first layer.

Also for a dry heat treated product aged overnight under conditions of 23°C and 100 %RH, an adhesion test was performed by the above-described method.

[Preparation of Coating Liquid]

(1) Preparation of Coating Liquid (1)

A stirrer, a thermometer, a dropping funnel, and a reflux cooling tube were attached to a separable flask reactor having a capacity of 2 L, and the gas within the reactor was replaced with nitrogen. The reactor was charged with 616 parts by mass of xylene as a solvent, 100 parts by mass of a propylen-1-butene copolymer (prepared by the method disclosed in the publication of Japanese Patent No. 4025401; composed of 96 mol% of monomer units based on propylene and 4 mol% of monomer units based on 1-butene), 50 parts by mass of maleic anhydride, and 25 parts by mass of n-butyl methacrylate, followed by heating to 140°C and stirring, so that a solution was obtained. Then, 1 part by mass of di-tert-butyl peroxide was added and stirring was continued at that temperature for 5 hours. Thus, a reaction between the propylene-1-butene copolymer and the maleic anhydride was performed. An oil bath was used for the heating.

After completion of the reaction, the temperature of the reaction product was lowered to room temperature and then the reaction product was poured into 1000 parts by mass of acetone and the precipitated white solid was collected by filtration. The white solid was washed with acetone and then dried under reduced pressure, so that an olefin polymer (1) with maleic anhydride and n-butyl methacrylate having been added was obtained. The resulting polymer had an Mw of 72, 604, an Mn of 40, 750, a molecular weight distribution (Mw/Mn) of 1.8, and an MFR of 4.2 g/10 min. When the amount of the olefin polymer (1) was taken as 100% by mass, the amount of monomer units based on maleic anhydride was 1.7% by mass and the amount of monomer units based on n-butyl methacrylate was 1.3% by mass.

A 2-liter separable flask reactor equipped with a stirrer, a thermometer, and a reflux cooling tube was charged with 200 parts by mass of toluene and 100 parts by mass of the olefin polymer (1), which were then stirred at 90°C to dissolve the olefin polymer (1). Subsequently, a mixture liquid of 10 parts by mass of JEFFAMINE M1000 (produced by Mitsui Fine Chemicals, Inc.) and 10 parts by mass of isopropanol as an emulsifier liquid was dropped over 10 minutes. After stirring for 5 minutes, 5 parts by mass of dimethylethanolamine was supplied and further stirred for 5 minutes, obtaining an olefin polymer mixture liquid (1).

Subsequently, the stirring device was exchanged to TK Robomix (manufactured by PRIMIX Corporation), and a mixture liquid of 100 parts by mass of isopropanol and 100 parts by mass of ion exchange water 100 parts by mass was dropped over 30 minutes while stirring the olefin polymer mixture liquid (1). Moreover, 300 parts by mass of ion exchange water was further dropped, obtaining milk white olefin polymer pre-dispersion liquid (1).

The resulting olefin polymer pre-dispersion liquid (1) was fed into a 2-L eggplant flask and part of the solvent was removed in vacuo with an evaporator, followed by filtration through a 200 mesh nylon net, obtaining a coating liquid (1). The particle diameter of the olefin polymer (1) dispersed in the obtained coating liquid (1) was 4.6 μm and the solid concentration measured by a method according to JIS K6828-1 was 38%.

(2) Preparation of Coating Liquid (2)

In a dispersion vessel (trade name: DESPA MH-L, manufactured by ASADA IRON WORKS. CO., LTD.), 1235 g of ion exchange water (specific electric conductance: 0.7 μs/cm or less) and 65 g of polyvinyl alcohol (QA2117, manufactured by Kuraray Co., Ltd., degree of saponification: 99.6%, degree of polymerisation: 1,700) are mixed and heated to 95°C under low-speed stirring (1500 rpm, peripheral speed: 4.1 m/min). After stirring the mixture at that temperature for 30 minutes to dissolve the polyvinyl alcohol, the mixture was cooled to 60°C. Thus, an aqueous polyvinyl alcohol solution was obtained. While stirring the aqueous polyvinyl alcohol solution, 16.3 g of polyacrylic acid (produced by Wako Pure Chemical Industries, Ltd., average molecular weight: 1,000,000) was mixed, and a water-soluble resin aqueous solution was prepared at room temperature under low-speed stirring (1500 rpm, peripheral speed: 4.1 m/min).

While stirring 100 g of the coating liquid (1), 116 g of the water-soluble resin aqueous solution was added slowly, obtaining a coating liquid (2). When the total amount of the olefin polymer (1) and the water-soluble resin composed of polyvinyl alcohol and polyacrylic acid in the coating liquid (2) was taken as 100% by mass, the content of the water-soluble resin was 20% by mass.

(3) Preparation of Coating Liquid (3)

A coating liquid (3) was obtained in the same manner as that for the coating liquid (1) except using 100 parts by mass of an olefin polymer (2) (BONDINE HX8290 (produced by ARKEMA), a polymer having monomer units based on ethylene, monomer units based on ethyl acrylate, and monomer units based on maleic anhydride) instead of the olefin polymer (1), and using a mixture liquid of 17 parts by mass of LATEMUL E-1000A (30% aqueous solution, produced by Kao Corporation), 5 parts by mass of NOIGEN EA-177 (produced by Dai-Ichi Kogyo Seiyaku Co., Ltd.) and 5 parts by mass of isopropanol as an emulsifier liquid.

The particle diameter of the olefin polymer (2) dispersed in the obtained coating liquid (3) was 0.2 $\mu$m and the solid concentration measured by a method according to JIS K6828-1 was 38%. When the amount of the olefin polymer (2) was taken as 100% by mass, the content of the monomer unite based on ethylene was 80% by mass, the content of the monomer units based on maleic anhydride was 3% by mass, and the content of the monomer units based on ethyl acrylate was 17% by mass.

(4) Preparation of Coating Liquid (4)

A coating liquid (4) was obtained in the same manner as that for the coating liquid (2) except using the coating liquid (3) instead of the coating liquid (1). When the total amount of the olefin polymer (2) and the water-soluble resin composed of polyvinyl alcohol and polyacrylic acid in the coating liquid (4) was taken as 100% by mass, the content of the water-soluble resin was 20% by mass.

(5) Preparation of Coating Liquid (5)

In a dispersion vessel (trade name: DESPA MH-L, manufactured by ASADA IRON WORKS. CO., LTD.), 1300 g of ion exchange water (specific electric conductance: 0.7 $\mu$s/cm or less) and 130 g of polyvinyl alcohol (QA2117, manufactured by Kuraray Co., Ltd., degree of saponification: 99.6%, degree of polymerisation: 1,700) are mixed and heated to 95°C under low-speed stirring (1500 rpm, peripheral speed: 4.1 m/min). After stirring the mixture at that temperature for 30 minutes to dissolve the polyvinyl alcohol, the mixture was cooled to 60°C. Thus, an aqueous polyvinyl alcohol solution was obtained. While the aqueous polyvinyl alcohol solution (60°C) was stirred under the above-mentioned conditions, an aqueous alcohol solution prepared by mixing 122 g of 1-butanol, 122 g of isopropyl alcohol and 520 g of ion exchange water was dropped in five minutes. After completion of the dropping, the stirring mode was switched to high-speed stirring (3, 000 rpm, peripheral speed; 8.2 m/min) . To the stirring system, 82 g of high purity montmorillonite (trade name: Kunipia G; manufactured by KUNIMINE INDUSTRIES CO., LTD.) was added slowly. After the completion of the addition, stirring was continued at 60°C for 60 minutes. Then, 243 g of isopropanol was further added over 15 minutes, followed by cooling of the mixture to room temperature. Thus, a clay mineral-containing liquid (1) was obtained. To the clay mineral-containing liquid (1), 0.1% by mass, based on the mass of the dispersion liquid, of a nonionic surfactant (polydimethylsiloxane-polyoxyethylene copolymer, trade name: SH3746, manufactured by Dow Corning Toray Co., Ltd.) was added under slow-speed stirring (1500 rpm, peripheral speed: 4.1 m/min). Then, the mixture was conditioned to pH 6 by means of ion exchange resin. Thus, a clay mineral dispersion liquid (1) was prepared.

In another dispersion pot (trade name: DESPA MH-L, manufactured by ASADA Iron Works, Co., Ltd.), 1067 g of ion exchange water (specific conductivity: 0.7 $\mu$s/cm or less) and 33 g of polyacrylic acid (manufactured by Wako Pure Chemical Industries, Ltd., average molecular weight: 1,000,000) were mixed together and stirred at low speed (1500 rpm, peripheral speed: 4.1 m/min) at room temperature. Thus, a solution of resin component (A3) was produced.

A mixture liquid was prepared by mixing 2519 g of the clay mineral dispersion liquid (1) and 1100 g of the solution of resin component (A3) slowly under low-speed stirring (1500 rpm, peripheral speed: 4.1 m/min). The mixture liquid was treated under a pressure of 1100 kgf/cm$^2$ using a high pressure dispersion instrument (trade name: Ultrahigh-Pressure Homogenizer M110-E/H, manufactured by Microfluidics Corporation.), obtaining a coating liquid (5). The montmorillonite cleaved in the coating liquid

The montmorillonite cleaved in the coating liquid (5) had an average particle diameter L of 560 nm, a unit thickness "a", determined by powder X-ray diffraction, of 1.2156 nm, and an aspect ratio Z of 460

[Example 1]

A 150-$\mu$m sheet made of a cyclic olefin resin (trade name: APEL APL5014DP; produced by Mitsui Chemicals, Inc.) was used as a substrate. To one side of the substrate, the coating liquid (2) was applied with a bar coater (#8) and was dried at 80°C for 20 minutes. Thus, a multilayer structure (1') having the substrate and a first layer adjoining the substrate was obtained. Moreover, to the surface of the first layer of the multilayer structure (1'), the coating liquid (5) was applied with a bar coater (#28) and was dried at 80°C for 20 minutes, forming a second layer. Thus, a multilayer structure (1) having the substrate, the first layer, and the second layer was obtained. The thickness of the first layer was 5 μm and the thickness of the second layer was 0.2 μm. In addition, the Na concentration in the second layer was 0.7%. The resulting multilayer structure (1) was dry heat treated, obtaining a dry heat treated product (1), which was then aged under a 23°C, 50 %RH atmosphere for 24 hours and then evaluated. The result is shown in Table 1.

[Example 2]

A multilayer structure (2') having a substrate and a first layer adjoining the substrate was obtained in the same manner as in Example 1 except using the coating liquid (4) instead of the coating liquid (2). In addition, a second layer was formed on a surface of the first layer of the multilayer structure (2') in the same manner as in Example 1, so that a multilayer structure (2) having the substrate, the first layer, and the second layer was obtained. The thickness of the first layer was 5 μm and the thickness of the second layer was 0.2 μm. In addition, the Na concentration in the second layer was 0.7%. The resulting multilayer structure (2) was dry heat treated, obtaining a dry heat treated product (2), which was then aged under a 23°C, 50 %RH atmosphere for 24 hours and then evaluated. The result is shown in Table 1.

[Comparative Example 1]

A multilayer structure (3') having a substrate and a first layer adjoining the substrate was obtained in the same manner as in Example 1 except using the coating liquid (1) instead of the coating liquid (2). In addition, a second layer was formed on a surface of the first layer of the multilayer structure (3') in the same manner as in Example 1, so that a multilayer structure (3) having the substrate, the first layer, and the second layer was obtained. The thickness of the first layer was 5 μm and the thickness of the second layer was 0.2 μm. In addition, the Na concentration in the second layer was 0.7%. The resulting multilayer structure (3) was dry heat treated, obtaining a dry heat treated product (3), which was then aged under a 23°C, 50 %RH atmosphere for 24 hours and then evaluated. The result is shown in Table 1.

[Comparative Example 2]

A multilayer structure (4') having a substrate and a first layer adjoining the substrate was obtained in the same manner as in Example 1 except using the coating liquid (3) instead of the coating liquid (2). In addition, a second layer was formed on a surface of the first layer of the Multilayer structure (4') in the same manner as in Example 1, so that a multilayer structure (4) having the substrate, the first layer, and the second layer was obtained. The thickness of the first layer was 5 μm and the thickness of the second layer was 0.2 μm. In addition, the Na concentration in the second layer was 0.7%. The resulting multilayer structure (4) was dry heat treated, obtaining a dry heat treated product (4), which was then aged under a 23°C, 50 %RH atmosphere for 24 hours and then evaluated. The result is shown in Table 1.

[Table 1]

| | First layer | second layer | | oxygen permeabili ty (cc/m$^3$*day* atm) | Adhesion property | |
|---|---|---|---|---|---|---|
| | Olefin polymer/water-soluble resin (% by mass) | Na concentration (ppm) | Hydroxyl groups and carboxyl groups in resin component (A3) (% by mass) | | 5 %RH | 90 %RH |
| Example 1 | 80/20 | 7000 | 43.4 | 9.4 | ○ | ○ |
| Example 2 | 80/20 | 7000 | 43.4 | 12.1 | ○ | ○ |
| Comparative Example 1 | 100/0 | 7000 | 43.4 | >20 | ○ | × |
| Comparative Example 2 | 100/0 | 7000 | 43.4 | >20 | ○ | × |

INDUSTRIAL APPLICABILITY

According to the mixture liquid of the present invention, there can be formed a layer capable of firmly bonding together a substrate and a coating film comprising an inorganic layered compound even under a highly humid condition. In addition, a multilayer structure in which a substrate and a coating film comprising an inorganic layered compound are firmly bonded together via an adhesive layer can be obtained even under a highly humid condition.

**Claims**

1. A mixture liquid comprising a water-soluble resin, an aqueous medium, and an olefin polymer comprising monomer units based on an α-olefin having 2 to 20 carbon atoms, monomer units based on an α,β-unsaturated carboxylic acid ester, and monomer units based on a compound selected from the group consisting of α,β-unsaturated carboxylic acids and α,β-unsaturated carboxylic acid anhydrides, wherein the content of the monomer units based on the α-olefin is 50% by mass or more where the total amount of the monomer units based on the α-olefin having 2 to 20 carbon atoms, the monomer units based on the α,β-unsaturated carboxylic acid ester, and the monomer units based on the compound selected from the group consisting of α,β-unsaturated carboxylic acids and α,β-unsaturated carboxylic acid anhydrides is taken as 100% by mass.

2. The mixture liquid according to claim 1, wherein the olefin polymer comprises monomer units based on propylene and monomer units based on 1-butene.

3. The mixture liquid according to claim 2, wherein the content of the monomer units based on propylene of the olefin polymer is 70 to 99 mol% where the total amount of the monomer units based on propylene and the monomer units based on 1-butene is take as 100 mol%.

4. The mixture liquid according to any one of claims 1 to 3, wherein the water-soluble resin is a resin containing a hydroxyl group.

5. The mixture liquid according to any one of claims 1 to 4, wherein the content of the water-soluble resin is 2 to 40% by mass where the total amount of the olefin polymer and the water-soluble resin is take as 100% by mass.

6. A method for producing the mixture liquid according to any one of claims 1 to 5, the method comprising the following steps (1) and (2) in order,

   (1) a step of dispersing the above-mentioned olefin polymer in the aqueous medium to obtain an olefin polymer dispersion liquid,
   (2) a step of mixing the above-mentioned olefin polymer dispersion liquid with an aqueous solution of a water-soluble resin.

7. A multilayer structure comprising a substrate and a first layer adjoining the substrate, wherein the first layer is a layer comprising a water-soluble resin and an olefin polymer comprising monomer units based on an α-olefin having 2 to 20 carbon atoms, monomer units based on an α,β-unsaturated carboxylic acid ester, and monomer units based on a compound selected from the group consisting of α,β-unsaturated carboxylic acids and α,β-unsaturated carboxylic acid anhydrides, wherein the content of the monomer units based on the α-olefin is 50% by mass or more where the total amount of the monomer units based on the α-olefin having 2 to 20 carbon atoms, the monomer units based on the α,β-unsaturated carboxylic acid ester, and the monomer units based on the compound selected from the group consisting of α,β-unsaturated carboxylic acids and α,β-unsaturated carboxylic acid anhydrides is taken as 100% by mass.

8. The multilayer structure according to claim 7 further comprising a second layer comprising an inorganic layered compound and a resin, the second layer adjoining the first layer.

9. The multilayer structure according to claim 8, wherein the resin contained in the second layer is a resin containing two or more kinds of functional groups.

10. A dry heat treated product obtained by dry heat treating the multilayer structure according to claim 9.

11. A wet heat treated product obtained by wet heat treating the dry heat treated product according to claim 10.

## INTERNATIONAL SEARCH REPORT

International application No.

PCT/JP2013/082896

### A. CLASSIFICATION OF SUBJECT MATTER
*C08L23/00*(2006.01)i, *B32B27/32*(2006.01)i, *C08F210/00*(2006.01)i, *C08L101/14*(2006.01)i

According to International Patent Classification (IPC) or to both national classification and IPC

### B. FIELDS SEARCHED

Minimum documentation searched (classification system followed by classification symbols)
C08L23/00, B32B27/32, C08F210/00, C08L101/14

Documentation searched other than minimum documentation to the extent that such documents are included in the fields searched
Jitsuyo Shinan Koho        1922–1996    Jitsuyo Shinan Toroku Koho    1996–2014
Kokai Jitsuyo Shinan Koho  1971–2014    Toroku Jitsuyo Shinan Koho    1994–2014

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | WO 2009/025063 A1  (Unitika Ltd.),<br>26 February 2009 (26.02.2009),<br>claims; paragraphs [0026] to [0028], [0074];<br>examples<br>& JP 2012-245786 A        & US 2011/0151167 A1<br>& EP 2179844 A1           & CN 101687405 A | 1,2,4-7<br>1,4-7 |
| X<br>Y | JP 2005-126482 A  (Unitika Ltd.),<br>19 May 2005 (19.05.2005),<br>claims; paragraphs [0012], [0013], [0015],<br>[0017], [0028], [0030], [0032], [0047], [0048],<br>[0071]<br>(Family: none) | 1-5,7<br>1,4-7 |

☒  Further documents are listed in the continuation of Box C.          ☐  See patent family annex.

| | |
|---|---|
| *  Special categories of cited documents:<br>"A"  document defining the general state of the art which is not considered   to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>    31 January, 2014 (31.01.14) | Date of mailing of the international search report<br>    18 February, 2014 (18.02.14) |
|---|---|
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2013/082896 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X<br>Y | JP 2011-105897 A  (Sumitomo Chemical Co., Ltd.),<br>02 June 2011 (02.06.2011),<br>claims; paragraphs [0018], [0019], [0043],<br>[0044], [0048], [0056], [0061], [0067]; example<br>1<br>(Family: none) | 1,4,5,7<br>1,4-7 |
| X<br>Y | JP 2004-137495 A  (Toyo Ink Manufacturing Co.,<br>Ltd.),<br>13 May 2004 (13.05.2004),<br>claims; paragraphs [0018], [0028], [0029],<br>[0034]; examples<br>& US 2006/0009561 A1    & EP 1548074 A1<br>& WO 2004/029168 A1    & CN 1685024 A | 1,4-7<br>1,4-7 |
| Y | JP 2010-248416 A  (Sumitomo Chemical Co., Ltd.),<br>04 November 2010 (04.11.2010),<br>claims; paragraphs [0040], [0037], [0051]<br>(Family: none) | 1,4-7 |
| A | JP 7-502219 A  (Minnesota Mining and<br>Manufacturing Co.),<br>09 March 1995 (09.03.1995),<br>claims; page 9, lower right column to page 10,<br>upper left column<br>& US 5407713 A          & EP 617665 A1<br>& WO 1993/011938 A1 | 8-11 |
| A | JP 2000-129056 A  (Showa Denko Kabushiki<br>Kaisha),<br>09 May 2000 (09.05.2000),<br>claims<br>& EP 995591 A1 | 8-11 |
| A | JP 2002-321319 A  (Toyobo Co., Ltd.),<br>05 November 2002 (05.11.2002),<br>claims; paragraphs [0029], [0041]<br>(Family: none) | 8-11 |
| A | JP 2011-20315 A  (Unitika Ltd.),<br>03 February 2011 (03.02.2011),<br>claims<br>(Family: none) | 8-11 |
| A | JP 2001-335736 A  (Unitika Ltd.),<br>04 December 2001 (04.12.2001),<br>claims<br>(Family: none) | 8-11 |

Form PCT/ISA/210 (continuation of second sheet) (July 2009)

**EP 2 930 207 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 11263802 A
- JP 4025401 B